# EUROPEAN PATENT APPLICATION

(11) **EP 3 905 041 A1**
(43) Date of publication of application: **03.11.2021**
(21) Application number: 18945005.9
(22) Date of filing: 28.12.2018
(51) Int. Cl.: G06F 9/50

(54) **METHOD AND APPARATUS FOR ALLOCATING DATA PROCESSING RESOURCES**

(71) Applicant: Uisee Technologies (Beijing) Ltd, Beijing 102402 (CN)
(72) Inventor: FENG, Wei, Beijing 102402 (CN); LIN, Wei, Beijing 102402 (CN); ZHANG, Yu, Beijing 102402 (CN); SHI, Lei, Beijing 102402 (CN); LIU, Xiaotong, Beijing 102402 (CN)
(74) Representative: MERH-IP Matias Erny Reichl Hoffmann Patentanwälte PartG mbB
(86) International application number: PCT/CN2018/124817
(87) International publication number: WO 2020/133205

(57) **Abstract**

The present disclosure provides an apparatus and method for positioning, and particularly, for data processing resource allocation positioning. The method includes determining a current system state of a system and allocating data processing resources of a data processing device based on the current system state. The system state may be determined based on operation conditions of positioning sensors of the system. The system state may correspond to one or more lifespan parameters. The method may enable allocation of limited computing resources to sensor data analysis models corresponding to positioning sensors in good operation conditions. Therefore, positioning can be performed accurately and efficiently.

## Description

### TECHNICAL FIELD

The present disclosure relates to the field of positioning, and more particularly, to data processing resource allocation for positioning.

### BACKGROUND

Positioning plays a particularly important role in many fields, such as autonomous driving. Positioning may require a lot of computing resources. Allocating data processing resources is essential to a positioning process to ensure rapid and efficient positioning.

### SUMMARY

The present disclosure is provided to achieve rapid positioning while ensuring positioning accuracy. Since positioning sensors may correspond to different sensor data analysis models (e.g., algorithms). The present disclosure can allocate limited data processing resources to sensor data analysis models corresponding to positioning sensors in good operation states. Therefore, the positioning can be performed accurately and efficiently.

In an aspect of the present disclosure, a method for location recognition is provided. The method includes determining a current system state of a system; and allocating data processing resources of a data processing device based on the current system state, wherein the system state is determined based on an operation state of the positioning sensor of the system and corresponds to one or more lifespan parameters. The positioning sensors of the system include at least a first plurality of positioning sensors and a second plurality of positioning sensors, wherein the first plurality of positioning sensors comprises at least one positioning sensor, and wherein the second plurality of positioning sensors comprises at least one positioning sensor.

In some embodiments, the data processing device is an on-board electronic data processing device of an autonomous vehicle. The first plurality of positioning sensors may include at least a first camera unit placed at a front part of the autonomous vehicle and a second camera unit placed at a rear part of the autonomous vehicle. The second plurality of positioning sensors may include at least a third camera unit mounted on a left side of the autonomous vehicle and a fourth camera unit mounted on a right side of the autonomous vehicle.

In some embodiments, determining a current system state includes: acquiring a previous system state of the current system state; determining that a positioning feedback of a positioning sensor is a positive feedback, wherein the positioning sensor is in a good operation state in the previous system state and wherein data processing resources are allocated to the positioning sensor in the previous system state; incrementing a lifespan parameter associated with the previous system state; designating the increased lifespan parameter as the lifespan parament associated with the current system state, wherein the lifespan parament of the current system state never exceeds a preset maximum lifespan value; and designating the previous system state as the current system state.

In some embodiments, determining the current state includes: acquiring the previous system state of the current system state; determining that a positioning feedback of a positioning sensor is a negative feedback, wherein the data processing resources are allocated to the positioning sensor and wherein the positioning sensor is in a bad operation state in the previous system state; and designating the previous system state as the current system state.

In some embodiments, determining a current system state includes: acquiring a previous system state of the current system state; determining that a positioning feedback of a positioning sensor is a negative feedback, wherein the data processing resources are allocated to the positioning sensor in the previous system state and wherein the positioning sensor is ins a good operation state in the previous system state; decrementing the lifespan parameter associated with the previous system state and designating the decremented lifespan parameter as the lifespan parameter of the current system state. When the lifespan parameter of the current system state is less than a preset minimum lifespan value, the current system state is different from the previous system state.

In some embodiments, determining a current system state includes: acquiring a previous system state of the current system state; determining that a positioning feedback of a positioning sensor is a positive feedback, wherein data processing resources are allocated to the positioning sensor in the previous system state, wherein the positioning sensor is in a bad operation state in the previous system state, and wherein the current system state is different from the previous system state.

In some embodiments, allocating data processing resources based on the current system state includes: determining a sensor data analysis model corresponding to the current system state; and allocating the data processing resources to the sensor data analysis model corresponding to the current system state.

In some embodiments, the system includes a first positioning sensor, a second positioning sensor, a third positioning sensor, and a fourth positioning sensor. The system state includes a first state, a second state, a third state, a fourth state, a fifth state, and a sixth state. The first state indicates that only the first positioning sensor is in a good operation state. The second state indicates that only the second positioning sensor is in a good operation state. The third state indicates that only the first positioning sensor and the second positioning sensor are in good operation states. The fourth state indicates that only the third positioning sensor is in a good operation state. The fifth state indicates that only the fourth positioning sensor is in a good operation state. The sixth state indicates that only the third positioning sensor and the fourth positioning sensor are in good operation states. The first state, the second state, and the third state correspond to the first sensor data analysis model. The fourth state, the fifth state, and the sixth state correspond to the second sensor data analysis model.

In some embodiments, the data processing resources required for executing the first sensor data analysis model are less than those required for running the second sensor data analysis model. The maximum lifespan values corresponding to the first state and the second state are greater than those corresponding to the fourth state and the fifth state.

In some embodiments, the first state and the second state correspond to the same maximum lifespan value. The third state and the sixth state correspond to the same maximum lifespan value. The fourth state and the fifth state correspond to the same maximum lifespan value. The maximum lifespan value corresponding to the first state and the second state is greater than the maximum lifespan value corresponding to the third state and the sixth state. The maximum lifespan value corresponding to the fourth state and the fifth state is greater than the maximum lifespan value corresponding to the third state and the sixth state.

In another aspect of the present disclosure, an apparatus for data processing resource allocation apparatus is provided. The apparatus includes: at least one storage device comprising a set of instructions; and at least one processor in communication with the at least one storage device. When executing the set of instructions, the at least one processor determines a current system state of the system and allocates data processing resources of a data processing device based on the current system state. The system state is determined based on operation states of positioning sensors of the system. The system state corresponds to one or more lifespan parameters. The positioning sensors of the system comprise at least a first plurality of positioning sensors and a second plurality of positioning sensors. The first plurality of positioning sensors includes at least one positioning sensor. The second plurality of positioning sensors comprises at least one positioning sensor.

Additional features of the present disclosure will be partially elaborated in the following description. The contents described in the following drawings and embodiments will become obvious to those of ordinary skill in the art through the elaboration. The inventive points in the present disclosure can be fully set forth by practices or using methods, means and combinations thereof elaborated in the detailed examples discussed below.

### BRIEF DESCRIPTION OF THE DRAWINGS

The following accompanying drawings illustrate in detail the exemplary embodiments disclosed in the present disclosure. In which, like reference numerals refer to similar structures throughout several views of the accompanying drawings. Those of ordinary skill in the art will understand that these embodiments are non-restrictive and exemplary. The accompanying drawings are only for the purposes of illustration and description, and are not intended to limit the scope of the present disclosure. Embodiments in other ways may also fulfill the inventive intention of the present disclosure. It should be understood that the accompanying drawings are not drawn to scale. In which:
FIG. 1 illustrates a diagram illustrating an application scenario for allocating data processing resources according to some embodiments of the present disclosure;
FIG. 2 illustrates an example data processing device according to some embodiments of the present disclosure, on which a data processing resource allocation method can be implemented;
**FIG. 3** illustrates a flowchart of a method for data processing resource allocation according to some embodiments of the present disclosure; and
**FIG. 4** illustrates a schematic diagram of a data processing resource allocation method according to some embodiments of the present disclosure.

### DETAILED DESCRIPTION

The following description provides the specific application scenarios and requirements of the present disclosure to enable those skilled in the art to manufacture and use the content of the present disclosure. Various local modifications to the disclosed embodiments will be apparent to those skilled in the art, and the general principles defined herein can be applied to other embodiments and applications without departing from the spirit and scope of the present disclosure. Therefore, the present disclosure is not limited to the illustrated embodiments but is accorded a widest scope consistent with the claims.

The terms used herein are only for the purpose of describing the specific exemplary embodiments and are not restrictive. For example, as used herein, the singular forms "a/an", "one" and "the" can also include the plural forms, unless explicitly specified in the context otherwise. As used in this specification, the terms "comprise," "include" and/or "contain" mean the presence of associated integers, steps, operations, elements and/or components, but do not exclude the presence of one or more other features, integers, steps, operations, elements and/or components, or other features, integers, steps, operations, elements and/or components can be added to the system/method.

In the present disclosure, the term "autonomous vehicle" may refer to a vehicle capable of sensing its environment and automatically sense, determine and then make decisions on an external environment without any input and/or intervention of a person (e.g., a driver, a pilot, etc.). The terms "autonomous vehicle" and "vehicle" can be used interchangeably. The term 'automatic driving' may refer to a capability of intelligently determining a surrounding environment and making navigation without any input from a person (e.g., a driver, a pilot, etc.).

In view of the following description, it is possible to significantly improve these and other features of the present disclosure, operations, and functions of related elements of the structure, combinations of the components and the manufacturing economy. With reference to the accompanying drawings, all of the above items form a part of the present disclosure. However, it should be clearly understood that the accompanying drawings are only for the purposes of illustration and description, and are not intended to limit the scope of the present disclosure.

The flowchart used in the present disclosure illustrates the operations implemented by the system according to some embodiments of the present disclosure. It should be clearly understood that the operations of the flowchart may be not implemented orderly. On the contrary, the operations may be implemented in a reverse order or simultaneously. In addition, one or more other operations may be added to the flowchart. One or more operations may be removed from the flowchart.

The positioning technology used in the present disclosure may be based on a Global Positioning System (GPS), a Global Navigation Satellite System (GLONASS), a Compass navigation system (COMPASS), a Galileo positioning system, a quasi-zenith satellite system (QZSS), a wireless fidelity (Wi-Fi) positioning technology, etc., or any combination thereof. One or more of the above positioning systems may be used interchangeably in the present disclosure.

An aspect of the present disclosure relates to a data processing resource allocation method. Specifically, the method may determine a current system state and allocate data processing resources according to the current system state. The system state is determined based on operation states of positioning sensors of a system. Preferably, the data processing resources may be allocated to a sensor data analysis model corresponding to one or more positioning sensors in a good operation state.

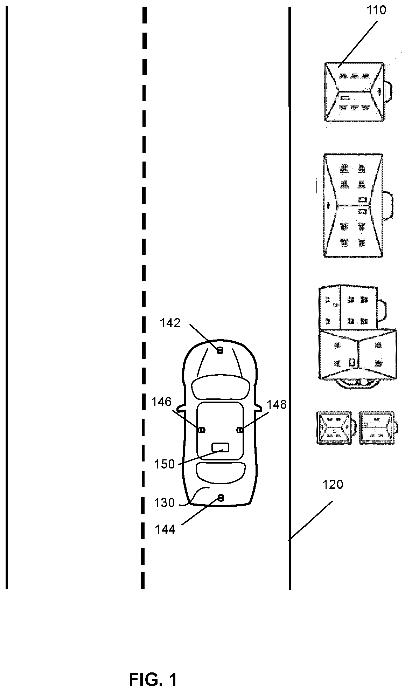

FIG. 1 is a diagram illustrating an application scenario for allocating data processing resources according to some embodiments of the present disclosure.

When travelling on a road surface 120, an autonomous vehicle 130 often needs to determine its own geographical location. Since the accuracy of the general positioning technology (e.g., GPS positioning) cannot meet the requirement of the autonomous vehicle 130, a precise geographical location of the autonomous vehicle 130 can be determined by utilizing a positioning sensor. In the present disclosure, the positioning sensor may refer to a sensor that acquires information for positioning, such as a camera unit.

As illustrated in FIG. 1, the autonomous vehicle 130 may include one or more sensors, such as a first positioning sensor 142, a second positioning sensor 144, a third positioning sensor 146, a fourth positioning sensor 148, a positioning apparatus (not shown), and a data processing resource allocation apparatus 150.

The one or more sensors may include a camera unit, a positioning unit, a laser radar, an inertial sensor, and the like. The camera unit may acquire images of a scene (e.g., a building 110) at a current location and a current shooting orientation for subsequent positioning. The camera unit is a positioning sensor.

As an example, the autonomous vehicle 130 may include four camera units. The first camera unit 142 may be placed at a front part of the autonomous vehicle 130. The second camera unit 144 may be placed at a rear part of the autonomous vehicle 130. The third camera unit 146 may be placed at a left part of the autonomous vehicle 130. The fourth camera unit 148 may be placed at a right part of the autonomous vehicle 130.

The positioning apparatus may be used to determine a specific location of the autonomous vehicle 130. In some embodiments, the positioning apparatus may include one or more computing modules. Each of the computing modules may execute a same sensor data analysis model or different sensor data analysis models.

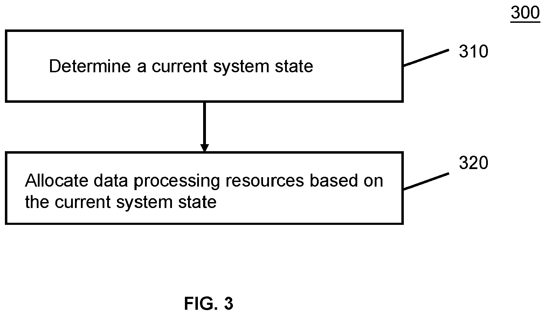

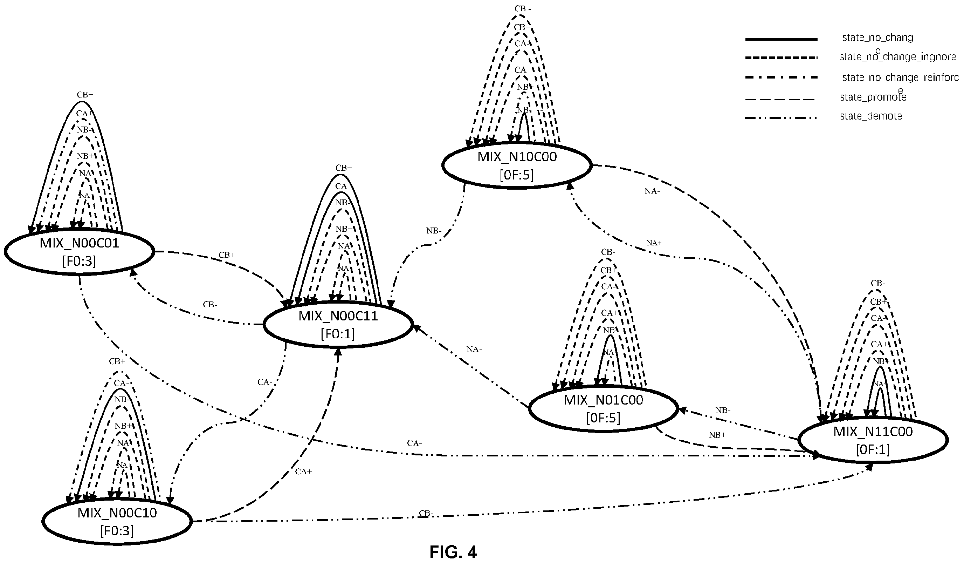

The data processing resource allocation apparatus 150 may perform a method for data processing resource allocation. Specifically, at a certain time instant, the data processing resource allocation apparatus 150 may allocate all data processing resources to a particular module, so that all data processing resources are used to execute a specific sensor data analysis model. The particular sensor data analysis model may be determined based on a current system state, which may be determined based on operation state(s) of positioning sensor(s). Please refer to FIGS. 3 and 4 and related descriptions for the specific data processing resource allocation methods.

It should be understood that the positioning sensor may be a camera unit or other sensors, such as a laser radar and/or an ultrasonic radar. For the sake of description, a camera unit is taken as an example in the present disclosure. However, the protection scope of the present disclosure is not limited thereto.

It should be understood that the positioning apparatus and the data processing resource allocation apparatus 150 may be provided together or individually. When the positioning apparatus and the data processing resource allocation apparatus 150 are provided together, the positioning apparatus has the function of optimizing the data processing resource allocation.

It should be understood that the above description of the application scenario of the data processing resource allocation method is only schematic, and the protection scope of the present disclosure is not limited thereto. The data processing resource allocation method may be applied to any field that needs positioning, such as the positioning of a tourism automatic interpretation device and the positioning of a shared bicycle.

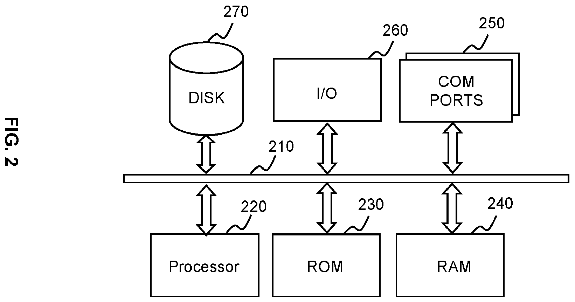

FIG. 2 illustrates an example data processing device according to some embodiments of the present disclosure. A method for data processing resource allocation may be implemented by the data processing device.

A computing device may carry/include an on-board control unit for implementing the autonomous vehicle 130, an on-board positioning apparatus, an on-board data processing resource allocation apparatus 150, etc. For example, the data processing resource allocation apparatus 150 may be implemented on the computing device to perform the functions of the data processing resource allocation apparatus 150 disclosed in the present disclosure.

For example, the computing device may comprise a communication port 250 connected to a network connected thereto to facilitate data communication. The computing device may further include a processor 220 in the form of one or more processors for executing computer instructions. The computer instructions may include, for example, a routine, a program, an object, a component, a data structure, a process or a module that performs a specific function described herein. For example, the processor 220 may determine the operation state of the positioning sensor of the system and may then determine the current system state. As another example, the processor 220 may allocate the data processing resources according to the current system state.

In some embodiments, the processor 220 may include one or more hardware processors, such as a microcontroller, a microprocessor, a Reduced Instruction Set Computer (RISC), an Application Specific Integrated Circuit (ASIC), an Application Specific Instruction-Set Processor (ASIP), a Central Processing Unit (CPU), a Graphics Processing Unit (GPU), a Physical Processing Unit (PPU), a microcontroller unit, a Digital Signal Processor (DSP), a Field Programmable Gate Array (FPGA), an Advanced RISC Machine (ARM), a Programmable Logic Device (PLD), any circuit or processor capable of performing one or more functions, etc., or any combination thereof.

The exemplary computing device may include an internal communication bus 210, a program storage and different forms of data storages (e.g., a magnetic disk 270, a Read Only Memory (ROM) 230, or a Random-Access Memory (RAM) 240) for various data files processed and/or transmitted by a computer. The exemplary computing device may further include program instructions stored in the ROM 230, the RAM 240, and/or any other type of non-transitory storage medium to be executed by the processor 220. The method and/or process of the present disclosure may be implemented as program instructions. The computing device further comprises input/output modules 260 that support an input/output between the computer and other components (e.g., a user interface element). The computing device may further receive programs and data through a network communication.

One processor is described in the computing device in the present disclosure merely for the purpose of illustration. However, it should be noted that the computing device in the present disclosure may include a plurality of processors. Thus, operations and/or methodical steps disclosed in the present disclosure may be performed by one processor as described herein or may be jointly performed by a plurality of processors. For example, if the processor 220 of the computing device performs steps A and B in the present disclosure, it should be understood that steps A and B may also be jointly or separately performed by two different processors during information processing (e.g., a first processor performs step A, a second processor performs step B, or the first and second processors jointly perform steps A and B).

FIG. 3 is a flowchart illustrating a method for data processing resource allocation according to some embodiments of the present disclosure. Process 300 may be implemented as a set of instructions in a non-transitory storage medium in the data processing resource allocation apparatus 150. The data processing resource allocation apparatus 150 may execute the set of instructions and correspondingly perform the steps in the process 300 to allocate data processing resources of a data processing device (e.g., an on-board electronic data processing device of an autonomous vehicle). The data processing resources refer to a data processing capability of the data processing device.

The operations of the illustrated process 300 presented below are intended to be illustrative rather than restrictive. In some embodiments, when the process 300 is implemented, one or more additional operations not described may be added, and/or one or more operations described herein may be deleted. In addition, the order of the operations illustrated in FIG. 3 and described below is not restrictive.

For the sake of illustration, a system including four positioning sensors is described as an example in the following descriptions. The four positioning sensors are a first positioning sensor, a second positioning sensor, a third positioning sensor, and a fourth positioning sensor. The four sensors may all be camera units (referring to the description made with reference to Fig. 1), any other positioning sensors, or a combination of camera units and other positioning sensors. It should be understood that the system with four positioning sensors is only an example, and the present invention may be applied to a system with more than two (e.g., six or eight) positioning sensors.

At 310, the data processing resource allocation apparatus 150 may determine a current system state.

The system state may be determined based on operation state(s) of positioning sensor(s) of a system. The operation state of each positioning sensor may be either "good" or "bad." As such, the system may have 16 system states (2^{∗}2^{∗}2^{∗}2). In the present disclosure, a positioning sensor is regarded as being in a good operation state when the information acquired by the positioning sensor can be used to achieve successful positioning. The positioning sensor is regarded as being in a bad operation state when the information acquired by the positioning sensor cannot be used to achieve successful positioning.

The system state may be represented using binary digits, wherein from right a first digit indicates the operation state of the third positioning sensor 146, a second digit indicates the operation state of the fourth positioning sensor 148, a third digit indicates the operation state of the first positioning sensor 142, and a fourth digit indicates the operation state of the second positioning sensor 144. "0" may indicate that the operation state of the positioning sensor is bad. "1" may refer that the operation state of the positioning sensor is good. As such, the system composed of the second positioning sensor, the first positioning sensor, the fourth positioning sensor, and the third positioning sensor may have 16 states in total, which may be represented as "0000", "0001," "0010", "0100", "1000," "0011," :0101," "1001," "0110," "1010," "1100," "0111," "1011," "1101," "1110," and "1111," respectively.

The information acquired by different positioning sensors may be used for positioning utilizing the same sensor data analysis model or different sensor data analysis models. As a result, the 16 system states may correspond to one or more sensor data analysis models. The data processing resource allocation apparatus 150 may allocate the data processing resources to execute the one or more sensor data analysis models. The sensor data analysis model corresponding to the system state refers to a data analysis model, such as an algorithm, adopted when the information acquired by the positioning sensor in a good operation state in the system state is used for positioning.

In some embodiments, for example, the first positioning sensor 142 and the second positioning sensor 144 may be camera units placed at a front part and a rear part of the autonomous vehicle 130, respectively. The third positioning sensor 146 and the fourth positioning sensor 148 may be camera units placed at a left part and a right part of the autonomous vehicle 130, respectively. When the information acquired by the first positioning sensor 142 and the second positioning sensor 144 is used for positioning, the same sensor data analysis model may be used and may be designated as a first sensor data analysis model. When the information acquired by the third positioning sensor 146 and the fourth positioning sensor 148 is used for positioning, the same sensor data analysis model may be adopted and labelled as a second sensor data analysis model.

The first positioning sensor 142 and the second positioning sensor 144 corresponding to the first sensor data analysis model may be classified into a group labeled as N. The third positioning sensor 146 and the fourth sensor 148 corresponding to the second sensor data analysis model may be classified into a group labeled as C. Thus, the 16 system states may be represented as "N00C00," "N00C01," "N00C10," "N01C00," "N10C00," "N00C11," "N01C01," "N10C01," "N01C10," "N10C10," "N11C00," "N01C11," "N10C11," "N11C01," "N11C10," and "N11C11."

When the system state is "N00C00," none of the positioning sensors are successful in positioning. If the system runs normally, this state is either non-existent or a transient state of the system, and the system state may be quickly switched to the other states. The system states "N00C01," "N00C10," "N01C00," "N10C00," "N00C11" and "N11C00" may indicate that the front and rear positioning sensors or the left and right positioning sensors are successful in positioning. At this time, the data processing resource allocation apparatus 150 only needs to run one of the first sensor data analysis model and the second sensor data analysis model. The system states "N01C01," "N10C01," "N01C10," "N10C10," "N01C11," "N10C11," "N11C01," "N11C10," and "N11C11" may indicate that at least one of the front and rear positioning sensors is successful in positioning, and that at least one of the left and right positioning sensors is successful in positioning. At this time, the data processing resource allocation apparatus 150 should simultaneously implement the first sensor data analysis model for the front and rear positioning sensors and the second sensor data analysis model for the left and right positioning sensors, so the data processing resource allocation apparatus 150 may have to simultaneously run the two data analysis models.

To increase the positioning speed, the data processing resource allocation apparatus 150 may only allocate the data processing resources to execute one data analysis model at the same time instant. Thus, the system state corresponding to two data analysis models can be quickly switched to the system state corresponding to one data analysis model. For example, the system state "N01C01" may be switched to "N01C00" or "N00C01." The system state "N10C01" may be switched to "N10C00" or "N00C01." The system state "N01C11" may be switched to "N01C00" or "N00C11." The system state "N11C11" may be switched to "N11C00" or "N00C11." The switching of the system states may be made to only reserve the positioning sensors corresponding to one data analysis model.

Then, for a system with four positioning sensors, only six system states may exist stably, i.e., a first state "N01C00," a second state "N10C00," a third state "N11C00," a fourth state "N00C01," a fifth state "N00C10" and a sixth state "N00C11." The data processing resource allocation apparatus 150 allocates the data processing resources according to the six system states of the system, and other states (e.g., system state "N00C00") may be ignored. In conjunction with the previous description, the first state "N01C00" indicates that only the first positioning sensor is in a good operation state. The second state "N10C00" indicates that only the second positioning sensor is in a good operation state. The third state 'N11C00' indicates that only the first positioning sensor and the second position senso are in good operation states. The fourth state "N00C01" indicates that only the third positioning sensor is in a good operation state. The fifth state "N00C10" indicates that only the fourth sensor is in a good operation state. The sixth state "N00C11" indicates that only the third positioning sensor and the fourth positioning sensor are in good operation states. The first state, the second state, and the third state correspond to the first sensor data analysis model. The fourth state, the fifth state, and the sixth state correspond to the second sensor data analysis model.

The system state corresponds to one or more lifespan parameters. At different time instants, the lifespan parameters corresponding to a given system state may be the same or different, and the given system state may have a maximum lifespan value. The lifespan parameter may indicate a stability of the system state, i.e., a sensitivity of the data processing resource allocation apparatus 150 to the state change, namely, the number of errors in the system state allowed to be detected. As the lifespan parameter rises, the number of errors in the system state allowed by the data processing resource allocation apparatus 150 increases, the sensitivity of the system to the change in the system state decreases, the robustness of the state increases, and the stability of the system state also increases. In some embodiments, the stability of the system state is related to its variable system state. In some embodiments, the stability of the system state is related to its corresponding sensor data analysis model. Please refer to the following description for more description of the lifespan parameter.

Specifically, step 310 may include: determining a previous system state; determining a positioning feedback of a positioning sensor in the previous system state; updating the current system state based on the positioning feedback.

The data processing resource allocation apparatus 150 may determine the previous system state according to the operation state of the positioning sensor of the system at a previous time instant. For example, the previous system state may be an initial state which may be manually set or automatically selected by the data processing resource allocation apparatus 150. As another example, the previous system state may be a certain state when the system is running, which is not specifically defined by the present disclosure.

The data processing resource allocation apparatus 150 may determine the positioning feedback of the positioning sensor in the previous system state. When the operation state of the positioning sensor is good in the previous system state (i.e., the positioning sensor is successful in positioning), the positioning sensor may send a positive feedback to the data processing resource allocation apparatus 150. The data processing resource allocation apparatus 150 may determine that the positioning feedback is a positive feedback. When the operation state of the positioning sensor is bad in the previous system state (i.e., the positioning sensor is not successful in positioning), the positioning sensor does not send a feedback signal or sends a negative feedback signal to the data processing resource allocation apparatus 150. The data processing resource allocation apparatus may then determine that the positioning feedback is a negative feedback. It is clear that the positioning feedbacks of different positioning sensors may be different in the previous system state. The data processing resource allocation apparatus 150 may only take account of the positioning feedback of the positioning sensor that is allocated with data processing resources in the previous system state. The positioning feedbacks of the other positioning sensors may be ignored.

The data processing resource allocation apparatus 150 may update the lifespan parameter of the previous system state based on a positioning feedback of a positioning sensor when the positioning sensor is allocated with the data processing resources and is in a good operation state in the previous system state (e.g., the first positioning sensor 142). If the positioning feedback of the positioning sensor that is in a good operation state (where the sensor state is 1) in the previous system state is a positive feedback, the lifespan parameter of the previous system state is incremented, for example by 1. If the positioning feedback of the positioning sensor having a good operation state in the previous system state is a negative feedback, the lifespan parameter of the previous system state may be decremented, for example by 1. It should be understood that the system may set a maximum lifespan value for the current system state, so the lifespan parameter of the previous system state should be less than the maximum lifespan value corresponding to the previous system state. When the lifespan parameter of a system state reaches the maximum lifespan value, the positive feedback will not cause the lifespan parameter of the system state to be further incremented, and the system state will remain at the maximum lifespan value. That is, even if there is a positive feedback, the lifespan parameter will not increase by incrementing by 1. Then, the data processing resource allocation apparatus 150 may determine the current system state based on the updated lifespan parameter. When the lifespan parameter of the previous system state is less than or equal to the maximum lifespan value corresponding to the previous system state and greater than a minimum lifespan value, the previous system state is designated as the current system state. When the lifespan parameter of the previous system state is less than or equal to the minimum lifespan value, the current system state may be changed and may be different from the previous system state. The minimum lifespan value may be set to 0 or any other value less than the maximum lifespan value.

For a positioning sensor allocated with the data processing resources has a bad operation state in the previous system state (e.g., the second positioning sensor 144, i.e., a positioning sensor for which a data analysis model adopted when information acquired by the positioning sensor is used for positioning is the same as that adopted for the positioning sensor having a good operation state in the previous system state at the previous time instant), the data processing resource allocation apparatus 150 may determine the current system state based on a positioning feedback of the positioning sensor. When the positioning feedback is a positive feedback, the current system state may be changed and may be different from the previous moment system state. When the positioning feedback is a negative feedback, the current system state is not influenced and maintained at the previous system state.

For a positioning sensor not allocated with the data processing resources in the previous system state (e.g., the third positioning sensor 146 and/or the fourth positioning sensor 148, i.e., a positioning sensor for which a data analysis model executed when information acquired by the positioning sensor is used for positioning is different from the data analysis model executed for the positioning sensor having a good operation state in the previous system state at the previous time instant), no matter whether the positioning feedback is a positive feedback or a negative feedback, the data processing resource allocation apparatus 150 does not respond to the state, and the current system state remains unchanged until a state of a group containing a positioning sensor currently having a good operation state (e.g., a positioning sensor group composed of the first positioning sensor 142 and the second positioning sensor 144) becomes 00 (e.g., N00).

At 320, the data processing resource allocation apparatus 150 may allocate the data processing resources based on the current system state.

Specifically, step 320 may include: determining a sensor data analysis model corresponding to the current system state; and allocating the data processing resources to the data analysis model corresponding to the current system state. For example, when the current system state is 'N00C10', the data processing resource allocation apparatus 150 may allocate all of the data processing resources to execute the second sensor data analysis model.

FIG. 4 is a schematic diagram of an embodiment of data processing resource allocation for a system including the six system states described above, wherein "state_no_change_reinforce" indicates that the system state is unchanged and the feedback may enhance the system state. "State demo" indicates that the feedback may weaken the system state. "State promote" indicates that the system state is upgraded. "State_no_change" indicates that the system state is unchanged. "State no change ignore' indicates that the system state is unchanged and the feedback may be ignored.

In this embodiment, as mentioned above, the apparatus 150 allocates the data processing resources to execute only one data analysis model at a time instant; the apparatus 150 may only take account to the state of the positioning sensor corresponding to a certain data analysis model at the same time instant, while ignoring or stopping the receipt of the state of the positioning sensor corresponding to another data analysis model. Therefore, for the apparatus 150, there are only states "N10C00," "N01C00," "N00C10," "N00C01," "N11C00," and "N00C11," and the other states in the combination of the 16 states of the first to fourth positioning sensors are ignored or not responded to. For example, the apparatus 150 will not respond to the states "N00C00," "N01C01," "N10C01," "N01C10," "N10C10," "N01C11," "N10C11," "N11C01," "N11C10," or "N11C11."

In some embodiments, the system may set different lifespan parameters for the states of different groups of sensors based on the different importance of the positioning sensors of groups N and C in the autonomous driving. A greater importance may correspond to a greater lifespan parameter. For example, the lifespan parameter of the states "N10C00" and "N01C00" of the positioning sensor is 5. The lifespan parameter of the states 'N00C10' and `N00C01' of the positioning sensor is 3 (which may also be the same value). The lifespan parameter of the states 'N11C00' and 'N00C11' of the positioning sensor is 1. For example, in an ellipse in the system state labelled with MIX_N10C00, MIX_N10C00 indicates that the state of the fourth positioning sensor is 1, and the remaining states are 0. [0F:5] indicates that a maximum lifespan value is 5. NA+ indicates that a positioning feedback of a first positioning sensor (i.e., the first positioning sensor 142) in Group N is a positive feedback. NA- indicates that the positioning feedback of the first positioning sensor in Group N is a negative feedback. NB+ indicates that a positioning feedback of a second positioning sensor (i.e., the second positioning sensor 144) in Group N is a positive feedback. NB- indicates that the positioning feedback of the second positioning sensor in Group N is a negative feedback. The meanings of CA+, CA-, CB+, and CB- are similar. CA+ indicates that a positioning feedback of a first positioning sensor (i.e., the third positioning sensor 146) in Group C (left and right positioning sensors) is a positive feedback. CA- indicates that the positioning feedback of the first positioning sensor in Group C is a negative feedback. CB+ indicates that a positioning feedback of a second positioning sensor (i.e., the fourth positioning sensor 148) in Group C is a positive feedback. CB- indicates that the positioning feedback of the second positioning sensor in Group C is a negative feedback. The system states may be the same or different at different time instants. When the system state is unchanged, the allocation of data processing resources by the data processing resource allocation apparatus 150 is unchanged. When the system state is changed, the allocation of data processing resources by the data processing resource allocation apparatus 150 may be unchanged or changed. For example, when the system state is changed from the first state "N01C00" to the third state "N11C00," since the state of Group C is always 0 and only the state of Group N is changed, the allocation of the data processing resources remains unchanged, and the first sensor data analysis model corresponding to Group N still runs. Similarly, when the system state is changed from the fourth state "N00C01" to the fifth state "N00C10," the allocation of data processing resources remains unchanged, and the second sensor data analysis model still runs. Similarly, when the system state is changed from the first state "N01C00" to the sixth state "N00C11," since the positioning sensors containing 1 are transformed from Group N to Group C, the allocation of data processing resources is changed correspondingly, and the first sensor data analysis model is transformed to the second sensor data analysis model. When the allocation of data processing resources is changed, the data processing resource allocation apparatus 150 may switch the data processing resources between the first sensor data analysis model and the second sensor data analysis model. The system may set different lifespan parameters for different states to reduce the number of times of switching between the data analysis models.

It should be understood that, in some embodiments, the first positioning sensor 142 and the second positioning sensor 144 may be camera units placed at the front part and rear part of the autonomous vehicle 130, and the third positioning sensor 146 and the fourth positioning sensor 148 may be camera units placed at the left part and right part of the autonomous vehicle 130. Because at the same time point, the state of at most one sensor is allowed to be changed under the same sensor data analysis model, or the change of a sensor state triggers the change of the sensor data analysis model. The changes among the six system states are not arbitrary. For example, the first state "N01C00" and the second state "N10C00" cannot be directly switched to each other. The fourth state "N00C01" and the fifth state "N00C10" cannot be directly switched to each other. The third state "N11C00" and the sixth state "N00C11" cannot be directly switched to each other.

As illustrated in FIG. 4, the first state "N01C00" may be switched to the third state "N11C00" and the sixth state "N00C11". The second state "N10C00" may be switched to the third state "N11C00" and the sixth state "N00C11." The third state "N11C00" may be switched to the first state "N01C00" and the second state "N10C00". The fourth state "N00C01" may be switched to the third state "N11C00" and the sixth state "N00C11." The fifth state "N00C10" may be switched to the third state "N11C00" and the sixth state "N00C11." The sixth state "N00C11" may be switched to the fourth state "N00C01" and the fifth state "N00C10."

The positioning result depends not only on the current positioning, but also on the positioning at a previous time instant. For example, the visual positioning usually requires a positioning result of a previous frame (i.e., positioning at a previous time instant) and a motion model to estimate a positioning result of a next frame (i.e., positioning at a current time instant), and then optimizes the positioning result of the next frame. It should be understood that if the positioning at the current time instant and the positioning at the previous time instant use the same data analysis model, the positioning result is good. If the positioning at the current time instant and the positioning at the previous time instant use different data analysis models, the positioning result is poor. Thus, frequent switching of resources will lead to a poor positioning result.

As can be seen from the above description, for the first state "N01C00", its variable system states are the third state "N11C00" and the sixth state "N00C11." The first state "N01C00' corresponds to the first sensor data analysis model, and the sixth state "N00C11" corresponds to the second sensor data analysis model. In order to prevent the data processing resources from being frequently switched between the first sensor data analysis model and the second sensor data analysis model, the first state "N01C00" is assigned with a high stability, i.e., the first state "N01C00" is assigned with a great maximum lifespan value. Similarly, the second state "N10C00", the fourth state "N00C01," and the fifth state "N00C10" are assigned with great maximum lifespan values.

For the third state "N11C00", its variable system states are the first state "N01C00" and the second state "N10C00". The first state "N01C00", the second state "N10C00," and the third state "N11C00" correspond to the first sensor data analysis model. Even if the third state "N11C00" is changed, the data processing resource allocation apparatus 150 still allocates the data processing resources to the first sensor data analysis model, and the data processing resources will not be switched between the first sensor data analysis model and the second sensor data analysis model. Therefore, the third state "N11C00" is assigned with a small maximum lifespan value. Similarly, the sixth state "N00C11" is assigned with a small maximum lifespan value.

As can be seen from the above, to prevent frequent switching of the data processing resources, the maximum lifespan value corresponding to the first state "N01C00" and the second state "N10C00" is greater than the maximum lifespan value corresponding to the third state "N11C00" and the sixth state "N00C11." The maximum lifespan value corresponding to the fourth state "N00C01" and the fifth state "N00C10" is greater than the maximum lifespan value corresponding to the third state "N11C00" and the sixth state "N00C11."

Further, the data processing resources required for running the first sensor data analysis model and the second sensor data analysis model are different. For example, the data processing resources required for running the first sensor data analysis model are less than those required for running the second sensor data analysis model. For the optimal allocation of the data processing resources, the first state "N01C00" and the second state "N10C00" are assigned with a high stability, and the fourth state "N00C01" and the fifth state "N00C10" are assigned with a low stability. That is, the maximum lifespan value corresponding to the first state "N01C00" and the second state "N10C00" is greater than that corresponding to the fourth state "N00C01" and the fifth state "N00C10."

To sum up, the first state "N01C00" and the second state "N10C00" correspond to the same maximum lifespan value. The third state "N11C00" and the sixth state "N00C11" correspond to the same maximum lifespan value, and the fourth state "N00C01" and the fifth state "N00C10" correspond to the same maximum lifespan value. The maximum lifespan value corresponding to the first state "N01C00" and the second state "N10C00" is greater than the maximum life span parameter corresponding to the fourth state "N00C01" and the fifth state "N00C10." The maximum lifespan value corresponding to the fourth state 'N00C01' and the fifth state 'N00C10' is greater than the maximum life span parameter corresponding to the third state 'N11C00' and the sixth state 'N00C11'. As an example, the maximum lifespan value corresponding to the first state 'N01C00' and the second state 'N10C00' is 5, the maximum lifespan value corresponding to the fourth state 'N00C01' and the fifth state 'N00C10' is 3, and the maximum lifespan value corresponding to the third state 'N11C00' and the sixth state 'N00C11' is 1.

Referring to FIG. 4, the process 300 is elaborated through an example where the previous system state at the current moment is N00C01 and the lifespan parameter corresponding to the previous system state is the maximum lifespan value of 3.

When the third positioning sensor 146, which is a positioning sensor allocated with the data processing resources and having a good operation state in the previous system state, has a positive feedback (i.e., CA+) as the positioning feedback, the lifespan parameter corresponding to the state is incremented, i.e., "state_no_change_reinforce." The increment lifespan parameter is 4 (greater than the maximum lifespan value of 3). The incremented lifespan parameter is set as the maximum lifespan value 3. At this time, the system state remains unchanged, and the current system state is the previous system state N00C01. When the positioning feedback is a negative feedback (i.e., CA-), the lifespan parameter corresponding to the state is decremented, i.e., "state demote." The decremented lifespan parameter is 2 (greater than 0). At this time, the system state remains unchanged, and the current system state is still the previous system state N00C01.

It should be understood that when the third positioning sensor is associated with three consecutive negative positioning feedbacks, the lifespan value corresponding to the state is decremented to 0. At this time, the system state is changed to N11C00, which is shown in Fig. 4 as a state changing from an ellipse labelled with MIX_N00C01 to an ellipse labelled with MIX_N11C00. As shown in Fig. 4, the lifespan value corresponding to the state N11C00 is 1, which indicates that either a negative feedback associated with the first positioning sensor 142 or a negative feedback associated with the second positioning sensor 144 may cause the system to be changed. Once the first positioning sensor 142 has a negative feedback NA-, the system state will be changed to N10C00 directly. Once the second positioning sensor 144 has a negative feedback NB-, the system state will be changed to N01C00 directly. For the three states N11C00, N10C00 and N01C00, the sensor data analysis model of the apparatus 150 is always the first sensor data analysis model.

When the fourth positioning sensor, which is a positioning sensor allocated with the data processing resources and having a bad operation state in the previous system state, has a positive feedback (i.e., CB+) as the positioning feedback, the system state is changed to N00C11, i.e., "state promote." When the positioning feedback is a negative feedback, the system state remains unchanged and does not affect the system state N00C01, i.e., "state no change." The current system state is the previous system state N00C01.

The data analysis model used when information acquired by the first positioning sensor and second positioning sensor is used for positioning is different from the data analysis model used for the third positioning sensor. For the positioning sensor not allocated with the data processing resources in the previous parameter system state, the influence of the positioning feedback on the change of the system state may be ignored, i.e., "state_no_change_ignore." The system state remains unchanged, and the current system state is the previous system state N00C01.

Next, the data processing resource allocation apparatus 150 may allocate the data processing resources to execute the data analysis model corresponding to the current system state according to the current system state.

To sum up, after reading the detailed disclosure, those skilled in the art can understand that the content of the detailed disclosure may be presented by way of example only and may not be restrictive. Although not explicitly stated here, those skilled in the art can understand that the present disclosure is intended to encompass various reasonable changes, improvements and modifications to the embodiments. These changes, improvements and modifications are intended to be proposed by the present disclosure and fall within the spirit and scope of the exemplary embodiments of the present disclosure.

In addition, certain terms in the present disclosure have been employed to describe the embodiments of the present disclosure. For example, 'one embodiment', 'an embodiment' and/or 'some embodiments' mean that particular features, structures or characteristics described in conjunction with the embodiment(s) may be included in at least one embodiment of the present disclosure. Therefore, it can be emphasized and understood that two or more references to 'an embodiment' or 'one embodiment' or 'an alternative embodiment' in various parts of the specification do not necessarily all refer to the same embodiment. In addition, the particular features, structures, or characteristics can be combined appropriately in one or more embodiments of the present disclosure.

It should be understood that in the foregoing description of the embodiments of the present disclosure, in order to help understanding one feature and for the purpose of simplifying the present disclosure, the present disclosure sometimes combines various features in a single embodiment, drawing or a description thereof. The present disclosure sometimes disperses various features in a plurality of embodiments of the present invention. However, this does not mean that the combination of these features is necessary, and it is completely possible for those skilled in the art to extract some of the features as separate embodiments for understanding when reading the present disclosure. That is, the embodiments in the present disclosure can also be understood as the integration of a plurality of sub-embodiments, each of which is also tenable when a content thereof is less than all features of a single embodiment previously disclosed.

In some implementations, the numerals representing the quantities or properties of certain implementations used to describe and claim the present disclosure should be understood as being modified by the term 'about', 'approximately' or 'substantially' in some cases. For example, unless otherwise stated, 'about', 'approximately' or 'substantially' may indicate a change of ±20 % of the value described. Therefore, in some implementations, the numerical parameters listed in the written description and the appended claims are approximations that may vary depending on the desired properties sought to be obtained by a particular implementation. In some implementations, the numerical parameters should be interpreted according to the quantity of significant digits reported and by applying the common rounding technologies. Although some implementations elaborating the present disclosure list a wide range of numerical intervals and parameter approximations, the specific embodiments have list values as accurate as possible.

Each of the patents, patent applications, publications of the patent applications and other materials cited herein, such as articles, books, specifications, publications, documents, items, etc., can be incorporated herein by reference. The entire content for all the purposes may be associated with this document at present or in future, except any prosecution document history related thereto that may be inconsistent or conflict with this document, or any same prosecution document history that may have a restrictive influence on the broadest scope of the claims. For example, if there is any inconsistency or conflict between the description, definition and/or use of a term associated with any material included and a term related to this document, the term in this document shall prevail.

Finally, it should be understood that the implementations of the application disclosed herein are illustrative of the principles of the implementations of the present disclosure. Other modified embodiments are also within the scope of the present disclosure. Therefore, the embodiments disclosed in the present disclosure are merely examples rather than limitations. Those skilled in the art can adopt alternative configurations to implement the invention in the present disclosure according to the embodiments in the present disclosure. Therefore, the embodiments of the present disclosure are not limited to those described accurately in the application.

## Claims

1. An apparatus for allocating data processing resources of a data processing device, comprising:
at least one storage device comprising a set of instructions; and
at least a processor in communication with the at least one storage device, wherein when executing the set of instructions, the at least one processor:
determines a current system state of the system; and
allocates the data processing resources of the data processing device based on the current system state;
wherein the system state is determined based on operation states of positioning sensors of the system and corresponds to one or more lifespan parameters;
wherein the positioning sensors of the system comprise at least a first plurality of positioning sensors and a second plurality of positioning sensors,
wherein the first plurality of positioning sensors comprises at least one positioning sensor, and wherein the second plurality of positioning sensors comprises at least one positioning sensor.

2. The apparatus of claim 1, wherein the data processing device is an on-board electronic data processing device of an autonomous vehicle;
wherein, the first plurality of positioning sensors comprises at least a first camera unit mounted at a front part of the autonomous vehicle and a second camera unit mounted at a rear part of the autonomous vehicle; and
wherein the second plurality of positioning sensors comprises at least a third camera unit mounted on a left side of the autonomous vehicle and a fourth camera unit mounted on a right side of the autonomous vehicle.

3. The apparatus of claim 1, wherein to determine the current system state of the system, the at least one processor:
acquires a previous system state of the current system state;
determines that a positioning feedback of a positioning sensor, which is allocated with data processing resources and has a good operation state in the previous system state, is a positive feedback;
increments a lifespan parameter of the previous systems state and designates the incremented lifespan parameter as the lifespan parameter of the current system state, wherein the lifespan parameter of the current system state never exceeds a preset maximum lifespan parameter; and
designates the previous system state as the current system state.

4. The apparatus of claim 1, wherein to determine the current system state of the system, the at least one processor:
acquires the previous system state of the current system state;
determines that a positioning feedback of a positioning sensor is a negative feedback, wherein the positioning sensor is allocated with data processing resources and was in a bad operation state in the previous system state; and
designates the previous system state as the current system state.

5. The apparatus of claim 1, wherein to determine the current system state of the system, the at least one processor:
acquires a previous system state of the current system state;
determines that a positioning feedback of a positioning sensor is a negative feedback, wherein the positioning sensor is allocated with the data processing resources and is in a good operation state in the previous system state;
decrements a lifespan parameter of the previous system state and designates the decremented lifespan parameter as the lifespan parameter of the current system state; and
wherein when the lifespan parameter of the current system is less than a preset minimum lifespan value, the current system state is different from the previous system state.

6. The apparatus of claim 1, wherein to determine the current system state of the system, the at least one processor:
acquires a previous system state of the current system state; and
determines that a positioning feedback of a positioning sensor is a positive feedback, wherein the positioning sensor is allocated with the data processing resources and is in a bad operation state in the previous system state;
wherein the current system state is different from the previous system state.

7. The apparatus of claim 1, wherein to allocate the data processing resources of the data processing device based on the current system state, the at least one processor:
determines a sensor data analysis model corresponding to the current system state; and
allocates the data processing resources to the sensor data analysis model corresponding to the current system state.

8. The apparatus of claim 1, wherein:
the system comprises a first positioning sensor, a second positioning sensor, a third positioning sensor, and a fourth positioning sensor;
the system state comprises a first state, a second state, a third state, a fourth state, a fifth state, and a sixth state;
the first state indicates that only the first positioning sensor is in a good operation state;
the second state indicates that only the second positioning sensor is in a good operation state;
the third state indicates that only the first and second positioning sensors are in good operation states;
the fourth state indicates that only the third positioning sensor is in a good operation state;
the fifth state indicates that only the fourth positioning sensor is in a good operation state;
the sixth state indicates that only the third and fourth positioning sensors are in good operation states;
the first state, the second state, and the third state correspond to the first sensor data analysis model; and
the fourth state, the fifth state, and the sixth state correspond to the second sensor data analysis model.

9. The apparatus of claim 8, wherein, the data processing resources required for executing the first sensor data analysis model are less than the data processing resources required for executing the second sensor data analysis model;
the maximum lifespan parameters corresponding to the first state and the second state are greater than the maximum lifespan parameters corresponding to the fourth state and the fifth state.

10. The apparatus of claim 8, wherein:
the first state and the second state correspond to the same maximum lifespan parameter;
the third state and the sixth state correspond to the same maximum lifespan parameter;
the fourth state and the fifth state correspond to the same maximum lifespan parameter;
the maximum lifespan parameters corresponding to the first state and the second state are greater than the maximum lifespan parameters corresponding to the third state and the sixth state; and
the maximum lifespan parameters corresponding to the fourth state and the fifth state are greater than the maximum lifespan parameters corresponding to the third state and the sixth state.

11. A method for allocating data processing resource of a data processing device, wherein the method is implemented by the apparatus for data processing resource allocation positioning, comprising:
determining, a current system state of the system;
allocating data processing resources of a data processing device based on the current system state;
wherein, the system state is determined based on an operation state of positioning sensors of the system, and corresponds to one or more lifespan parameters;
wherein, the positioning sensors of the system comprise at least a first plurality of positioning sensors and a second plurality of positioning sensors,
wherein the first plurality of positioning sensors comprises at least one positioning sensor, and the second plurality of positioning sensors comprises at least one positioning sensor.

12. The method of claim 11, wherein the data processing device is an on-board electronic data processing device of an autonomous vehicle;
wherein, the first plurality of positioning sensors comprises at least a first camera unit mounted at a front part of the autonomous vehicle and a second camera unit mounted at a rear part of the autonomous vehicle; and
wherein, the second plurality of positioning sensors comprises at least a third camera unit mounted on a left side of the autonomous vehicle and a fourth camera unit mounted on a right side of the autonomous vehicle.

13. The method of claim 11, wherein determining the current system state of the system comprises:
acquiring, a previous system state of the current system state;
determining that a positioning feedback of a positioning sensor, which is allocated with data processing resources and has a good operation state in the previous system state, is a positive feedback;
increasing and setting a lifespan parameter of the previous systems state as the lifespan parameter of the current system state, wherein the lifespan parameter of the current system state never exceeds a preset maximum lifespan parameter; and
maintaining the current system state at the previous system state.

14. The method of claim 11, wherein determining the current system state of the system comprises:
acquiring, a previous system state of the current system state;
determining, that a positioning feedback of a positioning sensor, which is allocated with data processing resources and has a bad operation state in the previous system state, is a negative feedback; and
maintaining the current system state at the previous system state.

15. The method of claim 11, wherein determining the current system state of the system comprises:
acquiring, a previous system state of the current system state;
determining that a positioning feedback of a positioning sensor, which is allocated with data processing resources and has a good operation state in the previous system state, is a negative feedback;
reducing and setting a lifespan parameter of the previous system state as the lifespan parameter of the current system state; and
wherein when the lifespan parameter of the current system is less than a preset minimum lifespan value, the current system state is different from the previous system state.

16. The method of claim 11, wherein determining the current system state of the system comprises:
acquiring, a previous system state of the current system state;
determining that a positioning feedback of a positioning sensor, which is allocated with data processing resources and has a bad operation state in the previous system state, is a positive feedback;
wherein the current system state is different from the previous system state.

17. The method of claim 11, wherein allocating data processing resources of a data processing device based on the current system state, comprises:
determining a sensor data analysis model corresponding to the current system state;
allocating the data processing resources to the sensor data analysis model corresponding to the current system state.

18. The method of claim 11, wherein:
the system comprises a first positioning sensor, a second positioning sensor, a third positioning sensor, and a fourth positioning sensor;
the system state comprises a first state, a second state, a third state, a fourth state, a fifth state, and a sixth state;
the first state indicates that only the first positioning sensor is in a good operation state;
the second state indicates that only the second positioning sensor is in a good operation state;
the third state indicates that only the first and second positioning sensors are in good operation states;
the fourth state indicates that only the third positioning sensor is in a good operation state;
the fifth state indicates that only the fourth positioning sensor is in a good operation state;
the sixth state indicates that only the third and fourth positioning sensors have good operation states;
the first state, the second state, and the third state correspond to the first sensor data analysis model; and
the fourth state, the fifth state, and the sixth state correspond to the second sensor data analysis model.

19. The method of claim 18, wherein the data processing resources required for executing the first sensor data analysis model are less than the data processing resources required for executing the second sensor data analysis model;
the maximum lifespan parameters corresponding to the first state and the second state are greater than the maximum lifespan parameters corresponding to the fourth state and the fifth state.

20. The method of claim 18, wherein:
the first state and the second state correspond to the same maximum lifespan parameter;
the third state and the sixth state correspond to the same maximum lifespan parameter;
the fourth state and the fifth state correspond to the same maximum lifespan parameter;
the maximum lifespan parameters corresponding to the first state and the second state are greater than the maximum lifespan parameters corresponding to the third state and the sixth state; and
the maximum lifespan parameters corresponding to the fourth state and the fifth state are greater than the maximum lifespan parameters corresponding to the third state and the sixth state.
